# EUROPEAN PATENT SPECIFICATION

(11) **EP 1 895 170 B1**
(45) Date of publication and mention of the grant of the patent: **09.03.2016**
(21) Application number: 06756704.0
(22) Date of filing: 30.05.2006
(51) Int. Cl.: G01D 11/30, G01D 5/14, F15B 15/28

(54) **CYLINDER CONTROL UNIT**
ZYLINDERSTEUERUNGSEINHEIT
UNITÉ DE COMMANDE DE CYLINDRES

(30) Priority: 21.06.2005 JP 2005180031
(43) Date of publication of application: 05.03.2008
(73) Proprietor: ASA Electronics Industry Co., Ltd., Kodaira-shi, Tokyo 187-0031 (JP)
(72) Inventor: ASA, Yukihiro, ASA ELECTRONICS INDUSTRY CO., LTD., Kodaira-shi, Tokyo 1870031 (JP)
(74) Representative: Van Straaten, Joop
(86) International application number: PCT/JP2006/310708
(87) International publication number: WO 2006/137247

(56) References cited:
- DE-A1- 19 915 832
- JP-A- 9 231 889
- JP-A- 9 303 326
- JP-A- 03 257 733
- JP-A- 05 018 405
- JP-A- 05 103 833
- JP-A- 09 231 889
- JP-A- 2000 275 002
- JP-U- H0 299 303
- JP-U- 02 099 303
- JP-U- 05 008 483
- JP-U- 08 000 083

## Description

### [Field of the invention]

The present invention relates to a cylinder control unit determining motion range of a piston of a cylinder.

### [Background Art]

Conventionally, a piston position detecting device of a fluid pressure actuator
- mounting a magnet on a piston slidably contained in a nonmagnetic cylinder,
- setting a casing outside the cylinder near a part of the movement locus of the magnet,
- setting a differential Hall integrated circuit in the casing and
- separately setting 2 Hall elements in the direction same as the magnetic pole of the magnet
is disclosed in Patent Document 1.

Further documents that describe piston detecting devices are:
JP 09 303326:
   This document describes a device is having a sensor fitting groove extending in the moving direction of a piston formed in a circumferential surface of a cylinder tube, In the groove a case with a sensor comprising a sensor element is provided.
DE 199 15 832:
   This document describes a position transducer for a power control element that acts upon a hydraulic transducer cylinder with a linearly movable piston. The transducer has a Hall switch that outputs a switch signal for a defined position of the element. The Hall switch has a magnet integrated into the transducer cylinder and a pick-up part for mounting on the housing of the transducer cylinder.
JP 9 231 889:
   This document describes that in a sensor main body, two Hall elements are arranged close together on a substrate separately in the moving direction of a piston.
A further detecting device is disclosed in JP H02 99303.

The following is the principle of the operation of this piston position detecting device. By the operation of a cylinder, when a magnet is approached just below a differential Hall IC, the magnetic field by the north pole of the magnet is applied to one Hall element and the magnetic field by the south pole of the magnet is applied to another Hall element. Polarity of the magnetic field applied to each Hall element is opposite, so difference in magnetic flux density occur, switch is turned on by the output of an output voltage by this difference and the position of the cylinder is detected.

Patent document 1: JPA 1994-33914

### [Disclosure of Invention]

### [Problem to be Solved by the Invention]

However, the conventional piston position detecting device intends to detect the position of a piston with high accuracy by placing Hall IC in a required position with respect to the magnet, though specifying motion range of a piston is not disclosed. In the patent document 1, there is a technically incorrect description that magnetic flux density of the magnet is a sine curve. In this case, persons skilled in the art will recognize that when the magnet approaches just below the differential Hall IC, on/off of the Hall IC will not be switched.

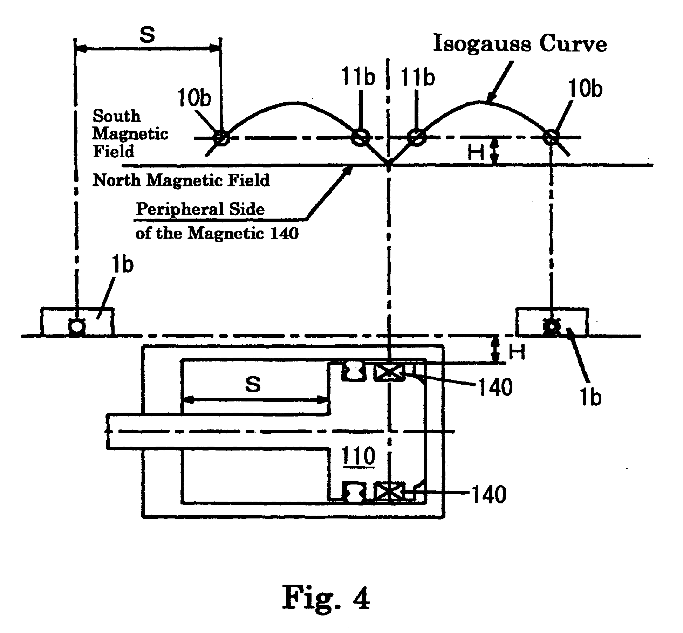

Simply mounting 2 piston position devices above on outside of a cylinder, on/off of Hall IC can only be controlled using the gradual change point of the isogauss line as explained using Fig. 4, so motion range of a piston cannot be specified with high accuracy.

Therefore, the purpose of the present invention is to specify motion range of a piston with high accuracy by focusing on the nature of waveform.

### [Means for Solving the Problem]

To solve the problem above, the present invention is a cylinder control unit as claimed in claim 1

A cavity for containing the Hall IC is provided in the resin, or, a frame for positioning the Hall IC inside it may be provided in the resin. In case a frame being provided, it is necessary to prevent it from moving from the predetermined position until the resin hardens. So, it is better to form a positioning section which has contact with the inner wall of the mold for covering Hall IC with resin, or, which is able to be nipped between male and female molds. In addition, an opening is formed on the frame near the terminal of Hall IC, which increases validity of insulation of terminal and frame. Furthermore, a through opening is formed to pass resin which is not hardened yet. In this way, by ensuring resin to go around both sides of the frame, sealing of resin and productivity of position detecting device is improved. In particular, by forming the through opening at the end of the frame, the periphery of the through opening will be the positioning section, so the productivity of the position detecting device will increase in that the through opening and positioning section can be formed in one process.

The resin or the resin case is polyamide resin containing approximately 10 - 30% of glass fiber or polybutylene terephthalate resin containing approximately 10 - 30% of glass fiber,

Each position detecting device is mounted on groove, hole, depression or flat part on side of a cylinder.

The second position detecting device is mounted on the first magnetic pole of the magnetic body and the first position detecting device is mounted on the second magnetic pole side of the magnetic body of the cylinder control unit of the present invention.

### [Detailed Description of the Preferred Embodiment]

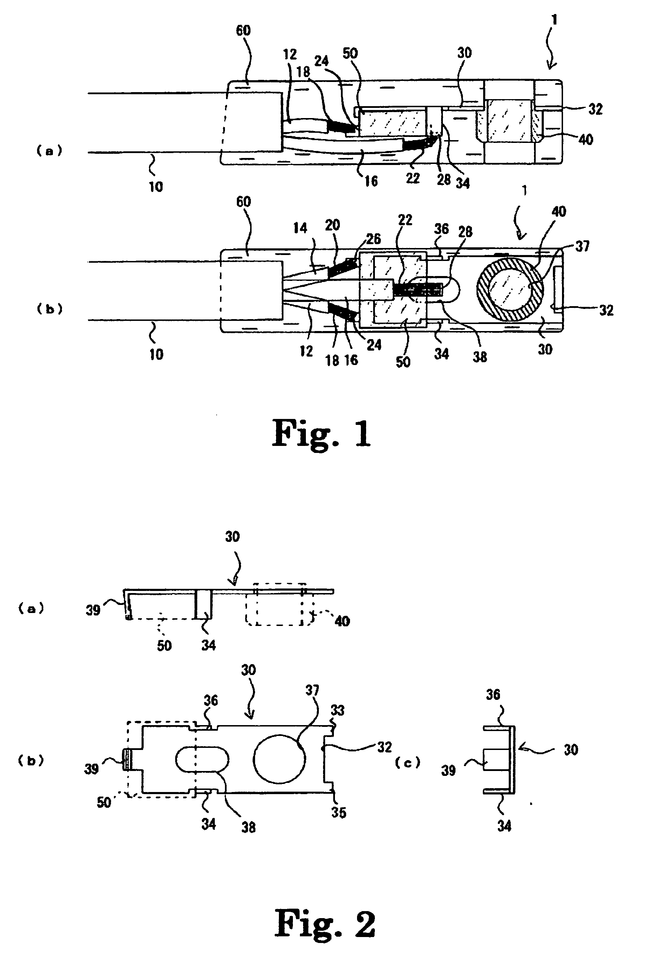

Fig. 1(a) is a cross section view of position detecting device 1 of the embodiment of the present invention. Fig. 1 (b) is a plane view of Fig. 1 (a). The position detecting device 1 detects position of a piston. Air cylinder is generally provided with a magnet in a piston, so that the position of a piston can be detected by means of the magnet and Hall IC provided in the position detecting device 1.

Fig. 1 shows
- Hall IC 50 (for example, Product No. EW-462 (Asahi Kasei Electronics)) for switching on/off electrical signals depending on relative position to a magnet provided in a piston in the air cylinder,
- resin 60 for covering the Hall IC 50 such as nylon type polyamide resin including hot-melt which is mold formed or others,
- stainless frame 30 for specifying direction and position of the Hall IC 50 in the resin 60 and
- screw installing section 40, mounted on the frame 30, for installing screw (not shown) for mounting the position detecting device 1 on the air cylinder.

Furthermore, Fig. 1 shows
- conductor 18, 20 and 22 connected to terminal 24, 26 and 28 of the Hall IC 50 by soldering or others,
- rubber insulator 12,14 and 16 for coating the conductor 18, 20 and 22 and
- rubber sheath section 10 including rubber insulators 12, 14 and 16.
As described later, LED and others for informing on-state of the Hall IC 50 can be provided on the position detecting device 1.

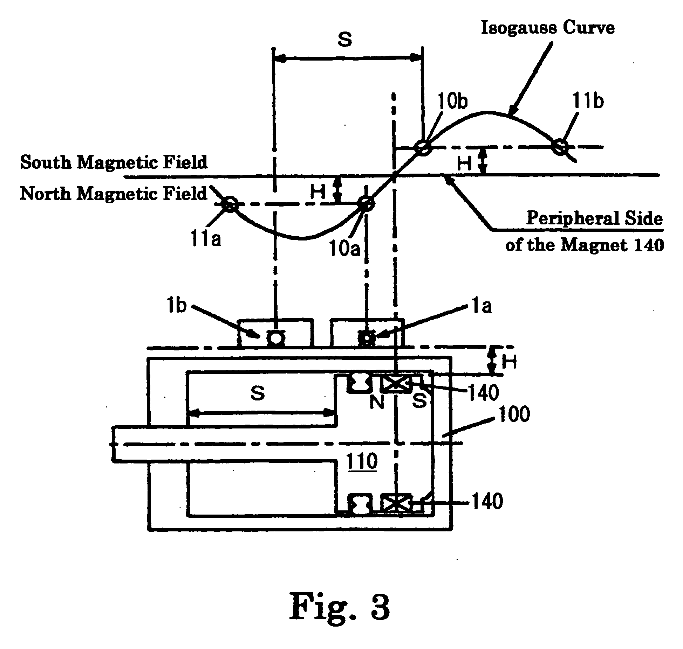

Here, the Hall IC 50 is an approximately rectangular solid, for example, with 3.0 ± 0.1 mm body length in the horizontal direction in Fig. 1 (b), 3.6 ± 0.1 mm body width in the vertical direction in Fig. 1 (b) and 1.2 ± 0.1 mm thickness (vertical direction in Fig. 1 (c)). Resin 60 has, for example, a diameter of 3.9 ϕ and length of 1.5 cm. Screw installing section 40 has, for example, a base with 3 ϕ outside diameter, an upper surface with 2.3 ϕ outside diameter and 2 ϕ inside diameter. Sheath section 10 is 2.8 ϕ.

A circular groove with a diameter of approximately 4.0 ϕ - 4.2 ϕ and an integrally formed opening close to said groove are formed on the side of the air cylinder in the long side direction in general. Position detecting device 1 in the present invention has a diameter of, for example, 3.9 ϕ, which is able to be mounted in this groove.

Fig. 2 is a detailed view of the frame 30 shown in Fig. 1. Fig. 2 (a) is a side view of the long side direction of the frame 30, Fig. 2 (b) is a plane view of the frame 30 and Fig. 2 (c) is a side view of the short side direction of the frame 30.

- Approximately elliptic opening 38 placed near terminal 28 of the Hall IC 50,
- round through hole 37 provided close to the opening 38, where the screw installing section 40 can be mounted,
- rectangular passing section 32 provided on one end of the frame 30, where the resin 60 passes before hardening,
- positioning sections 33 and 35, placed on both sides of passing section 32, in contact with the inner wall of mold (not shown) and
- grippers 39, 34 and 36, respectively provided near the other end and the opening 38 of the frame 30, which position the horizontal direction of Hall IC 1 in Fig. 2 (b)
are formed on the frame 30.

Opening 38 ensures insulation of terminal 28 and the frame 30 when terminal 28 and the conductor 22 are solder connected. By forming through hole 37 combined with the screw installing section 40, the position detecting device 1 will able to be mounted on the air cylinder with a screw. The screw installing section 40 and through hole 37 is connected by, for example, laser welding.

By forming passing section 32, the resin 60 before hardening is ensured to go around both sides of the frame 30, the resin 60 is able to be mold-formed efficiently and productivity of the position detecting device 1 increases. The Hall IC 50 is gripped between sides of grippers 34 and 36 on gripper 39 side and inside of the gripper 39- The gripper 39 is bent 83-85 degrees to the frame body so as to grip the Hall IC, which create springiness. Adhesive may be applied between the frame 30 and the Hall IC to specify the vertical position of the Hall IC 50 on the frame 30 in Fig. 2 (b).

Positioning sections 33 and 35 may be formed, for example, on the base of the frame. Furthermore, direction and position of the Hall IC 50 may be provided by a projection formed in the screw installing section 40 in mold, with positioning section 33 and 35.

Here, the body of the frame 30 is, for example, 9.48 mm in the long side direction, 3.2 mm in the short side direction and 0.2 mm in thickness. The diameter of through hole 37 is 2.3 ϕ. Opening 38 is 2.4 mm in the long side direction and 1.2 mm in the short side direction. Passing section 32 is 0.4 mm x 3.1 mm. Gripper 39 is 1.4 mm in height x 1 mm in width. Grippers 36 and 38 are 1.4 mm in height x 0.7 mm in width. Positioning sections 33 and 35 are 0.5 mm in width x 0.4 mm in length.

Each of the above dimensions of the frame 30 depend on shape and size of the Hall IC 50, mounting position (for example, groove on the side of the air cylinder) of the position detection device 1, and so on. Those dimensions are not limited to the above-mentioned amounts.

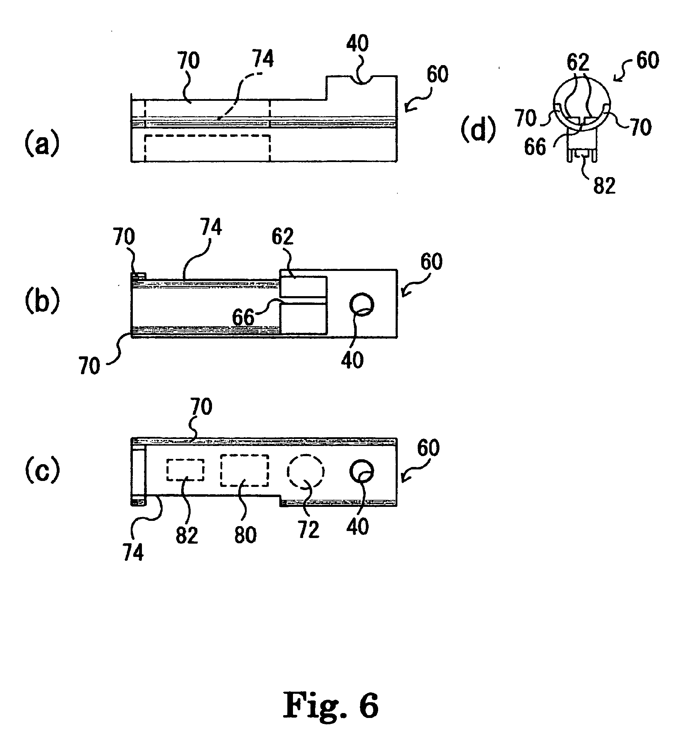

In addition, direction of the Hall IC 50 is, for example, sensor section 52 (Fig. 6) of the Hall IC 50 is placed in a direction perpendicular to the long length direction of the position detecting device 1. In this case, the Hall IC 50 may be faced either up or down. Placed in this direction, for example, setting is completed only by inserting the position detecting device 1 into the groove on the side of piston and fixing it with screw or others. Direction of magnetic poles of magnet and moving direction of the piston is the same in general. Furthermore, north pole is placed on the side where the air cylinder is stretched and south pole is placed on the side where the air cylinder is compressed.

Fig. 3 is a typical view showing an example mounting of the cylinder control unit including the position detecting device shown in Fig. 1 on an air cylinder 100. The air cylinder 100 and 2 position detecting devices 1a and 1b are shown in Fig. 3. The air cylinder 100 provides a piston 110. The piston 110 is placed so that north pole of a ring magnet 140 locates on the left side of Fig. 3 and south pole locates on the right side of Fig. 3.

In case the position of the piston 110 is as shown in Fig. 3, the IIall IC of the position detecting device 1a is turned on and, when this on-state is detected by piston drive not shown in the figures, the piston 110 is controlled to move to the left side of the figure. The piston drive controls air supply and supply timing to the air cylinder 100 depending on signals from the position detecting devices 1a and 1b.

In addition, the isogauss curve of magnet 140 based on peripheral side of the magnet 140 is appendedin Fig. 3. The isogauss curve is shaped like a sine curve and polarity is reverse across the boundary of the magnetic poles However, the isogauss curve is not a sine curve, though rise and decay are sharp due to a large amount of magnetic flux density change near the point where polarity is reversed (i.e. the boundary of the magnetic poles to the extremum) and it gently curves with distance from the extremum.

The position detecting devices 1a and 1b are respectively mounted on groove or others on the air cylinder. The distance between the position detecting devices 1a and 1b is equivalent to stroke S which is the motion range of the piston 110. The position detecting device 1a is mounted so that the insulator 16 side is located on the base side of the groove and others on the air cylinder. The position detecting device 1b is mounted reversely of the position detecting device 1a, i.e. so that the insulator 16 side is located on the opening side of the groove and others on the air cylinder.

In other words, the Hall IC of the position detecting device 1a is mounted so that it is turned on by the north magnetic field when the boundary of the magnetic poles of the magnet 140 reaches the displaced position from just below the sensor section 52 adding gap H between the magnet 140 and the position detecting devices 1a and 1h into consideration. The position detecting device 1a is a north pole sensor for detecting that the north pole of the magnet 140 reached the correspondent position of the sensor section 52. The Hall IC of the position detecting device Ib is mounted so that it is turned on by the south magnetic field when the boundary of the magnetic poles of the magnet 140 reaches the displaced position from just below the sensor section 52 adding gap H between the magnet 140 and the position detecting devices 1a and 1b into consideration. The position detecting device 1b is a south pole sensor for detecting that the south pole of the magnet 140 reached the correspondent position of the sensor section 52.

Point 10a on the isogauss curve shows the point where the Hall IC of the position detecting device 1a switches from off-state to on-state. Point 11a on the isogauss curve shows the point where the Hall IC of the position detecting device 1a switches from on-state to off-state. In this way, the Hall IC of the position detecting device 1a is in on-state only between point 10a and point 11a across the maximum value of the isogauss curve. Point 10b on the isogauss curve shows the point where the Hall IC of the position detecting device 1b switches from off-state to on-state. Point 11b on the isogauss curve shows the point where the Hall IC of the position detecting device 1b switches from on-state to off state. In this way, the Hall IC of the position detecting device 1b is in on-state only between point 10b and point 11b across the minimum value of the isogauss curve.

Fig. 4 is a comparative example of Fig. 3. Fig. 4 shows a state specifying stroke S by mounting 2 south pole sensor on the side of the air cylinder 100. The Hall IC of the position detecting device 1b is in on-state only between the point 10b and the point 11b. Therefore, specifying stroke S by the 2 position detecting devices 1b, as shown in the figure, one of the position detecting device 1b (on the right side of the figure) must be placed outside the air cylinder 100 and distance between both of the position detecting devices 1b will be long. In addition, the Hall IC of both of the position detecting devices 1b will be in on-state by the part where rise of isogauss line is not sharp. That is, on/off-state of the Hall IC of both of the position detecting devices 1b is controlled using the insensitive part. In case of using the 2 position detecting devices 1a, the same disadvantage as the case shown in Fig. 4 occurs.

Therefore, means shown in Fig. 3 has a beneficial effect which cannot be obtained by merely using the 2 position detecting devices 1b or the 2 position detecting devices la.

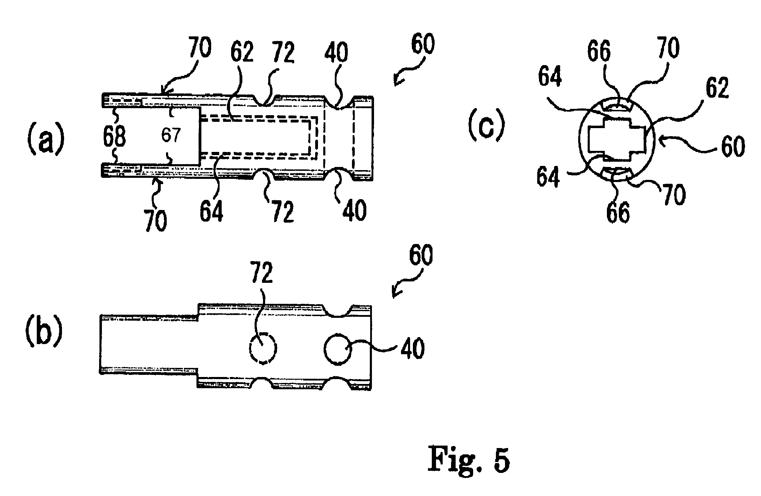

Fig. 5 shows an example deformation of the resin 60 of the position detecting device 1 shown in Fig. 1. Fig. 5 (a) is a side view of the resin 60 in the long side direction, Fig. 5 (b) is a plane view of the resin 60 and Fig. 5 (c) is a side view of the resin 60 in the short side direction. Same parts are assigned with the same signs in Fig. 1 and Fig. 5.

The resin 60, for example, is polyamide resin containing approximately 10 - 30% of glass fiber or is polybutylene terephthalate (PBT) resin containing approximately 10 - 30% of glass fiber, which provide strength. Screw installing section 40 is formed on the resin 60, as shown in Fig. 1.

As shown in Fig. 5 (a), cavity 62 for containing the Hall IC 50 is formed close to the screw installing section 40. The cavity 62 containing the Hall IC 50 and little space has the shape of approximately rectangular solid. Resin 60 shown in Fig. 5 and Fig. 6 is smaller than the Hall IC 50 of the already described size. Approximately 3.0 mm length already described is reduced to approximately 2.2 mm, approximately 3.6 mm width to approximately 3.3 mm and approximately 1.2 mm thickness to approximately 1.0 mm in particular.

As shown in Fig. 5 (a) and Fig. 5 (c), cavity 64 and recess 66 to contain the conductor 22 are formed from the upper side to the lower side of the cavity 62. Cavity 64 and the recess 66 have the shape of approximately rectangular solid here, though they may have the shape of approximately semicircle.

A pair of holding pieces 70 is formed near the cavity 64 and the recess 66 at the end of cavities 62 and 64. The holding piece 70 includes insulator holder 67 holding insulator 12, 14 and 16 and sheath section holder 68 holding the sheath section 10. Long side cross-section of the resin 60 of the insulator holder 67 has the shape of approximately semicircle. Long side cross-section of the resin 60 of sheath section holder 68 has a rainbow shape.

Marking section 72, one of which shows south pole and another of which shows north pole, is formed between the holding piece 70 and the screw installing section 40. The marking section 72 makes it easier for users to view which direction the position detecting device 1 should be set on the groove on the cylinder when using the position detecting device 1.

Here is the production process of the position detecting device 1 using the resin 60. First, conductors 18, 20 and 22 are connected to terminals 24, 26 and 28 on the Hall IC 50 by soldering or others. Then, according to the mark of the marking section 72, the Hall TC 50 is set in the direction and inserted into the cavity 62 of the resin 60.

Consequently, the Hall IC 50 is contained and positioned in the cavity 62. In addition, the conductor 22 and the insulator 16 are contained in the cavity 64. Furthermore, insulators 12, 14 and 16 are held at insulator holder 67 of the holding piece 70 and the sheath section 10 is held at sheath section holder 68. Then, space between the holding piece 70 and around it is covered with hot-melt resin such as poly amide resin not including glass fiber. Position detecting device 1 is thus produced.

Fig. 6 shows an example deformation of the resin 60 different from that used in Fig. 5. Fig. 6 (a) is a side view of the resin 60 in the long side direction, Fig. 6 (b) is a plane view of the resin 60, Fig. 6 (c) is a base view of the resin 60 and Fig. 6 (d) is a side view of the resin 60 in the short side direction. Same parts are assigned with the same signs in Fig. 1 and Fig. 6.

This position detecting device 1 is not equal to that in Fig. 5, being provided with the LED 80 which emits light when electrical signal outputted from the Hall IC 50 is on-state. The resin 60 is also polyamide resin containing approximately 10 - 30% of glass fiber, polybutylene terephthalate (PBT) resin. Upper part of the cavity 62 in Fig. 6 (a) is cut off, compared to that in Fig. 5 (a). The conductor 22 passes through this cut-off part.

Here, the holding piece 70 is U-shaped as shown in Fig. 6 (d). As shown in Fig. 6 (b), notch 74 for passing conductor connecting, for example, positive terminal and output terminal on the Hall IC 50 and the LED 80, is formed on the holding piece 70.

As shown in Fig. 6 (c), the LED 80 and resistor 82 can be mounted on the base of the position detecting device 1 close to notch 74. The LED 80 and the resistor 82 are electrically connected in series each other. The LED 80 and the resistor 82 are chip-shaped to reduce size and weight.

Marking section 72 showing whether the position detecting device 1 is for south pole/north pole is formed between the holding piece 70 and the screw installing section 40. Here, the resin 60 shown in Fig. 3 is able to fix, even if the marking section 72 showing south pole in the groove 130 of the air cylinder is on the opening side of the groove 130, or, if the marking section 72 showing north pole is on the opening side of the groove 130, because the outline of the resin 60 is approximately cylinder. However, the resin 60 shown in Fig. 6 is provided with the LED 80, so it is necessary to place this part in the opening of the groove 130. Therefore, in the production process of the position detecting device 1, whether it is for north pole/for south pole is uniquely determined by the direction of the Hall IC 50 set in the cavity 62.

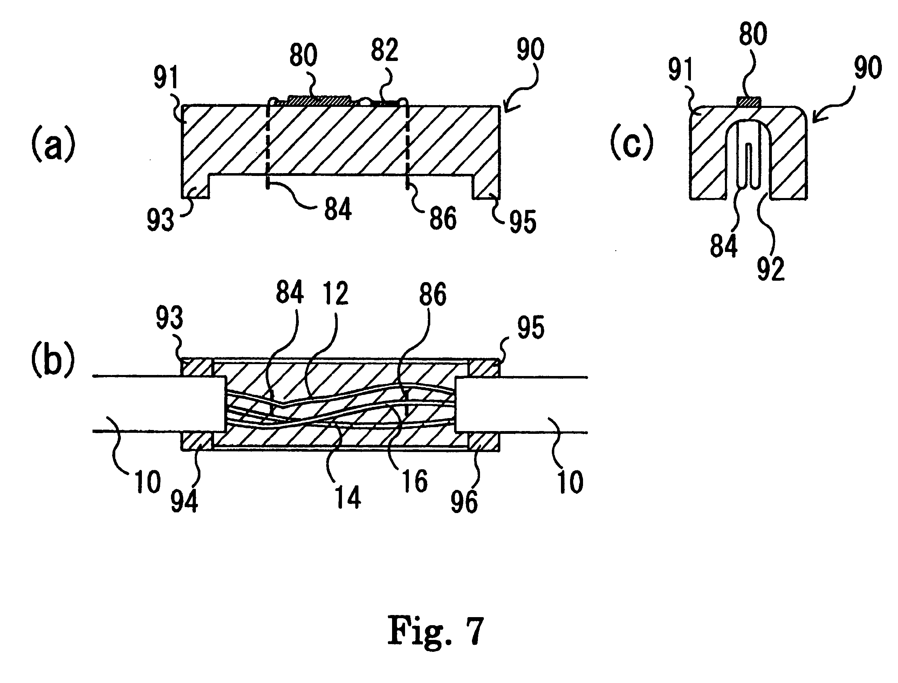

Fig. 7 is a typical diagram of member 91 of indicator light body 90 suited to using the resin 60 shown in Fig. 5 or others. Fig. 7 (a) is a side view of the long side direction of member 91 of the indicator light body 90. Fig. 7 (b) is a base view of member 91 of the indicator light body 90 and Fig. 7 (c) is a side view of the short side direction of member 91 of the indicator light body 90. Same parts are assigned with the same signs in Fig. 7 and Fig. 6 or other figures.

This kind of indicator light is effective, for example, when LED cannot be set on the position detecting device 1 because of the size of the groove 130 of the air cylinder or others. In addition, this is effective when it is difficult to see mounting position of the position detecting device 1.

Here, member 91 of the indicator light body 90 shown in the figure is covered by resin. This resin has, for example, a plane base and an arch-like cross-section perpendicular to the long side direction. In the present embodiment, this resin is a mixture of black hot-melt and transparent hot-melt at the rate of, for example, 1:2 - 2:1. This kind of resin is blackish translucent. That is to say, black hot-melt serves as a diffuser.

In this case, assuming that the LED 80 is a red LED, emitted light diffuses inside translucent hot-melt. Consequently, emission of the LED 80 was visible when indicator light was viewed from the horizontal direction.

Emission color of the LED 80 and hot-melt color are not limited to the above case, and blue LED or green LED, or, yellow hot-melt including buff yellow one or white hot-melt can be used. In particular, emission color of the LED 80 and hot-melt color should be complementary colors or colors close to them.

As shown in Fig. 7 (a), the LED 80 and the resistor 82 are placed on the upper surface of member 91 of indicator light. These are electrically series-connected by soldering or others. Each of the other end of indicator light 80 and the resistor 82 are respectively connected to notch contacts 84 and 86 by soldering or others.

Notch section is placed in the lower part of the notch contacts 84 and 86. The lower end of the notch section is wide, though the other parts are approximately half of the dimensions of the inside diameters of insulator 12, 14 and 16, that is, approximately half of the dimensions of the outside diameters of the conductor 18, 20 and 22. Consequently, by pressing the conductor 18 and others covered with insulator 12 and others into notch section, insulator 12 and others arc disconnected by notch section, the notch contact 84 and others, the conductor 18 and others come in contact with each other and these are electrically connected. In this case, the conductor is pressed by notch section which is smaller than the outside diameter of conductor and deformed longer and thinner In this way, using the above notch contact 84 and 86, the notch contact 84 and others and the conductor 18 and others are electrically connected without a process where the insulator 12 is cut by a nipper or others.

In addition, as shown in Fig. 7 (c), an arch-like sheath holder 92 for holding sheath 10 is formed on member 91 of the indicator light. The sheath 10 is gripped by sheath holder 92 as shown in Fig. 7 (b). Here, prior to said gripping, the sheath 10 itself is divided and the divided part is placed between the sheath holder 92. In this way, as stated above, the notch contact 84 and others and the conductor 18 and others are electrically connected. Detailed content relating to the indicator light was undisclosed when the present application was filed, so please refer to the descriptions in the specification of JP Application No. 2005-117257 contained in the specification of the present application.

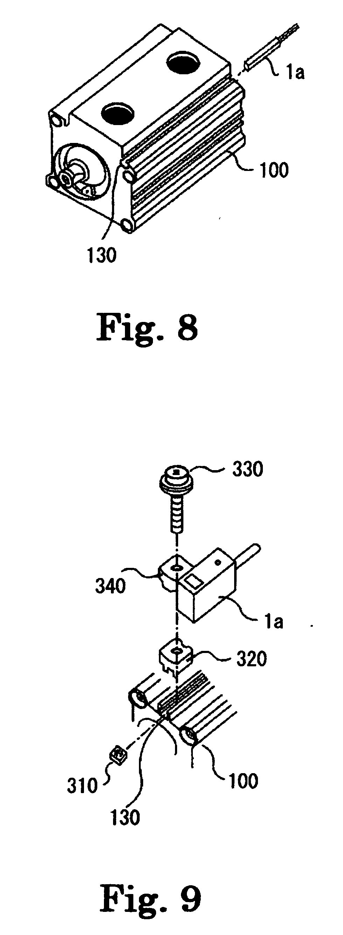

Fig. 8 is a diagram showing an example mounting of the position detecting device 1a and others on various air cylinders 100. There are various types of air cylinder 100. A circular groove 130 is formed on the air cylinder 100 shown in Fig. 8. A rectangular groove 130 is formed on the air cylinder 100 shown in Fig. 9. A plurality of grooves 130 is formed on some air cylinders.

The position detecting device 1a and others are slid and inserted into the circular groove 130. Then, setscrew is installed in the screw installing section 40 provided on the position detecting device 1a and others using screwdriver (not shown). In this way, tip of the setscrew hits the base of the groove 130, the position detecting device 1a and others are pressed by the inner wall close to the opening of the groove 130 and mounted on the air cylinder 100. The position detecting device 1b is mounted on the air cylinder 100 through the same means.

A nut 310 is inserted into the rectangular groove 130. A mounting bis 330 is screwed through a bis installing section 340 on the side of the position detecting device 1a and others and a spacer 320, to the nut 310. The position detecting device 1b is mounted on the air cylinder 100 through the same means.

A hole or a depression may be formed on th e air cylinder 100 instead of the groove 130. Furthermore, the position detecting device 1 may be adhered on the air cylinder 100 by adhesive.

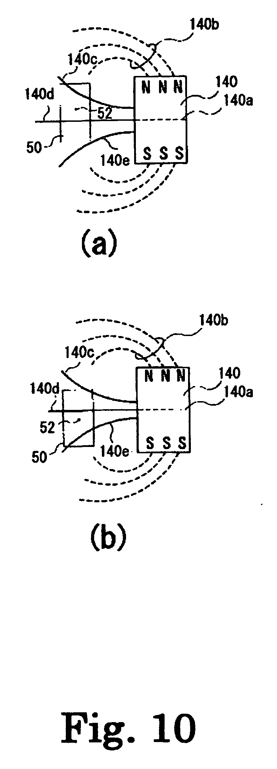

Fig. 10 is a principle explanatory diagram of position detecting device 1. Fig. 10 (a) shows the magnet 140 provided on the piston 110 before displacement and Fig. 10 (b) shows the magnet 140 after displacement. Magnet 140 is displaceable in the magnetic pole direction and set such that the boundary of north and south poles crosses the sensor section 52 of the Hall IC 50 after displacement. The sensor section 52 is a switching point of on/off electrical signal output of the Hall IC 50.

There is magnetic field line 140b around the magnet 140 connecting south pole and north pole with a curved line. In addition, there are isodynamic lines 140c - 140e around the magnet 140 where magnetic force passes the same point. Each isodynamic lines 140c - 140e and each magnetic field line 140b cross each other at right angles. Isodynamic line 140d is, for example, 0 gauss and isodynamic line 140c and 140e are, for example, respectively 25 gauss. Departing from the boundary of south and north poles of the magnet 140 to each magnetic pole, intensity of magnetic force of isodynamic lines increases in general.

As shown in Fig. 10 (a), before displacement of the magnet 140, isodynamic side 140d is placed on the lower side of the sensor section 52 of the Hall IC 50. In this case, the Hall IC 50 is off-state and electrical signal from the Hall IC turns off.

At the same time, as shown in Fig. 10 (b), after displacement of the magnet 140, isodynamic side 140d is placed on the upper side of the sensor section 52 in the Hall IC 50. In this case, the Hall IC 50 is on-state and electrical signal from the Hall IC turns on. Then, when the magnet 140 returns to the state before displacement, electrical signal switches off again.

When the direction of the Hall IC 50 is reversed, electrical signal from the Hall IC 50 turns on as shown in Fig. 10 (a) and electrical signal from the Hall IC 50 turns off as shown in Fig. 10 (b).

According to our experiment by blowing air to the air cylinder 100 and moving the piston 110 with the position detecting device 1 mounted on the body of the air cylinder 100, the mountable minimum stroke of the position detecting device 1 was found to be within 1 mm. The mountable minimum stroke of the contact-type detecting device is approximately 10 mm and the mountable minimum stroke of the non-contact-type detecting device is approximately 5 mm. Furthermore, when moving the piston 110 to the position where the Hall IC 50 is turned on and bringing the piston 110 back to the position where Hall IC is turned off, hysterisis was approximately 0.1 mm. The contact-type detecting device has a hysterisis of approximately 1.5 mm and the non-contact-type detecting device has a hysterisis of approximately 1 mm.

In addition, according to our experiment mounting the position detecting devices 1a and 1b on the air cylinder 100 so that the stroke S is 1mm, and, sending output signals from the position detecting devices 1a and 1b to the piston drive and operating the air cylinder 100, the desired piston motion was realized. In addition, the position detecting devices 1a and 1b are non-contact type detecting devices, so even if it was driven for 24 hours in a row, the motion range of the piston was able to be specified without lowering its accuracy.

In the present embodiments, mounting the position detecting device 1 on the body of the air cylinder 100 was taken as an example, but it should be noted that the position detecting device 1 can be mounted on an automobile, an elevator, a nursing-care equipment, a home security system, a cellular phone handset including folding type one, a disconnection detecting system, an industrial robot and so on provided with a magnet or with a built-in magnet.

The present invention may also be applied to the following examples:
- a door switch which detects opening/closing of an automobile door
- an elevator system which controls stop positions of an elevator
- a position control system of an arm which controls the position of robot arms and others of industrial machines or nursing devices
- a disconnection detection system which detects the disconnection of piano wires and others
- mutually detecting opening/closing the members of a folding-type cellular phone handset
- detection of pushing buttons on a cellular phune handset, etc.

### [Industrial Applicability]

The present invention relates to position detecting device and position detecting system applicable to cylinder, automobile, elevator, nursing-care equipment, home security system, cellular phone handset, disconnection detecting system, industrial robot and so on.

### [Brief description of the drawings]

Fig. 1 is a cross-section view and a plane view of the position detecting device 1 in the embodiment of the present invention.
Fig. 2 is a detailed view of the frame 30 shown in Fig. 1.
Fig. 3 is a typical diagram showing an example mounting of the position detecting 1 device shown in Fig. 1 on air cylinder 100.
Fig. 4 is a comparative example of Fig. 3.
Fig. 5 is a diagram showing an example deformation of the resin 60 of the position detecting device 1 shown in Fig. 1.
Fig. 6 is a diagram showing an example deformation of the resin 60 different from Fig. 5.
Fig. 7 is a typical diagram of member 91 of the indicator light body 90 suited to using the resin 60 shown in Fig. 5.
Fig. 8 is a typical diagram of position detecting system 100 including the position detecting device 1 shown in Fig. 1.
Fig. 9 is a typical diagram of position detecting system 100 including the position detecting device 1 shown in Fig. 1.
Fig. 10 is a principle explanatory diagram of position detecting in the position detecting device 1

### [Explanation of signs]

1, 1a, 1b position detecting device
10 sheath section
12, 14, 16 insulator
18, 20, 22 conductor
24. 26, 28 terminal
30 frame
40 screw installing section
50 Hall IC
52 sensor section
60 resin
100 air cylinder
110 piston
140 magnet

## Claims

1. Cylinder control unit, provided with a first and a second position detecting devices (1a, 1b) for specifying motion range of a piston in said cylinder, the position detecting devices being mounted on a groove, hole, depression or flat part on the side of a cylinder, wherein the first and the second position detecting devices (1a, 1b) respectively comprise
a Hall IC (50) comprising a sensor section (52) and an IC which switches on/off electrical signal output depending on the relative position of the sensor section to a magnetic pole of a magnetic body (140), so that moving direction of the piston crosses at right angles to the boundary of the magnetic poles
resin or resin case (60) covering said Hall IC (50) while positioning it inside, wherein
the Hall IC of the first position detecting device (1a) switches on/off of the output by magnetic force from a first magnetic pole,
the Hall IC of the second position detecting device (1b) switches on/off of the output by magnetic force from a second magnetic pole,
the resin or the resin case being
polyamide resin containing approximately 10 - 30% of glass fiber or polybutylene terephthalate resin containing approximately 10 - 30% of glass fiber,
the resin or resin case forming
a screw installing section (40) for installing a screw for attaching each of the position detecting devices to the cylinder is formed, and
a first cavity (62) having a shape of approximately rectangular solid for containing the Hall IC formed close to the screw installing section (40),
a second cavity (64) and a recess (66) both having a shape of approximately rectangular solid or a shape of approximately semicircle for containing a conductor connected to the Hall IC formed from the upper side to the lower side of the first cavity (62),
a pair of holding pieces (70) formed near the second cavity (64) and the recess (66), wherein the pair of holding pieces includes
an insulator holder (67) wherein a long side cross-section of the resin has a shape of approximately semicircle, and
a sheath section holder (68) wherein long side cross-section of the resin holding a sheath section covering each of the conductors has a rainbow shape.

2. Cylinder control unit according to Claim 1 provided with a frame for positioning the Hall IC inside the resin.

3. Cylinder control unit according to Claim 2 wherein a positioning section having contact with mold for covering the Hall IC with the resin is formed on the frame.

4. Cylinder control unit according to Claim 2 or 3 wherein a through opening for passing the resin before hardening is formed on the frame.

5. Cylinder control unit according to any one of Claim 1 to 4 wherein the second position detecting device is mounted on a first magnetic pole side of the magnetic body and the first position detecting device is mounted on a second magnetic pole side of the magnetic body.

## Patentansprüche

1. Zylindersteuerungseinheit, die mit einem ersten und einem zweiten Positionserfassungsgerät (1a, 1b) zum Angeben des Bewegungsbereichs eines Kolbens in besagtem Zylinder versehen ist, wobei die Positionserfassungsgeräte in eine Nute, ein Loch, eine Vertiefung oder einen flachen Teil an der Seite eines Zylinders montiert sind, wobei das erste beziehungsweise das zweite Positionserfassungsgerät (1a, 1b) Folgendes enthält:
einen Hall-IC (50), welcher einen Sensorabschnitt (52) enthält und einen IC, der den elektrischen Signalausgang abhängig von der Position des Sensorabschnitts im Verhältnis zu einem Magnetpol eines Magnetkörpers (140) ein- bzw. ausschaltet, sodass die Bewegungsrichtung des Kolbens die Grenze der Magnetpole im rechten Winkel überschreitet,
Harz oder ein Harzgehäuse (60), welches besagten Hall-IC (50) bedeckt, sodass er sich im Inneren befindet, wobei
der Hall-IC des ersten Positionserfassungsgerätes (1a) den Ausgang mittels Magnetkraft von einem ersten Magnetpol ein- bzw. ausschaltet,
der Hall-IC des zweiten Positionserfassungsgerätes (1b) den Ausgang mittels Magnetkraft von einem zweiten Magnetpol ein- bzw. ausschaltet,
wobei das Harz oder das Harzgehäuse ein
Polyamidharz ist, welches 10 bis 30 % Glasfaser enthält, oder Polybutylenterephthalatharz, welches 10 bis 30 % Glasfaser enthält,
wobei das Harz oder Harzgehäuse
einen Abschnitt zum Anbringen einer Schraube (40) für die Montage jedes der Positionserfassungsgeräte am Zylinder bildet und
einen ersten etwa quaderförmigen Hohlraum (62) zur Aufnahme des Hall-ICs, welcher in der Nähe des Abschnitts zum Anbringen der Schraube (40) gebildet wird,
einen zweiten Hohlraum (64) und eine Aussparung (66), welche beide etwa quaderförmig oder etwa halbkreisförmig sind, zur Aufnahme eines an den Hall-IC angeschlossenen Leiters, welche von der oberen bis zur unteren Seite des ersten Hohlraums (62) gebildet werden,
wobei in der Nähe des zweiten Hohlraums (64) und der Aussparung (66) ein Halterpaar (70) gebildet wird, welches
einen Isolierkörperhalter (67) einschließt, wobei ein Längsschnitt des Harzes etwa halbkreisförmig ist, und
einen Hülsenabschnitthalter (68), wobei ein Längsschnitt des Harzes, welches jeden der Leiter abdeckenden Hülsenabschnitt enthält, die Form eines Regenbogens hat.

2. Zylindersteuerungseinheit gemäß Patentanspruch 1, die mit einem Gestell zum Positionieren des Hall-ICs im Harz versehen ist.

3. Zylindersteuerungseinheit gemäß Patentanspruch 2, wobei ein Positionierabschnitt, welcher Kontakt mit der Form zum Abdecken des Hall-ICs mit dem Harz hat, auf dem Gestell gebildet wird.

4. Zylindersteuerungseinheit gemäß Patentanspruch 2 oder 3, wobei auf dem Gestell eine Durchgangsöffnung zum Hindurchlassen des Harzes vor dem Aushärten gebildet wird.

5. Zylindersteuerungseinheit gemäß einem der Patentansprüche 1 bis 4, wobei das zweite Positionserfassungsgerät auf eine erste Magnetpolseite des Magnetkörpers montiert ist und das erste Positionserfassungsgerät auf eine zweite Magnetpolseite des Magnetkörpers montiert ist.

## Revendications

1. Unité de commande de cylindre dotée d'un premier et d'un second dispositif de détection de position (1a, 1b) pour indiquer la course d'un piston dans ledit cylindre, les dispositifs de détection de position étant montés sur une fente, un orifice, une dépression ou une partie plane sur le côté d'un cylindre, le premier et le second dispositif de détection de position (1a, 1B) comportant respectivement
un CI à effet Hall (50) comprenant une partie capteur (52) et un CI qui met en marche / à l'arrêt un signal électrique de sortie en fonction de la position de la partie capteur par rapport à un pôle magnétique d'un corps magnétique (140), de sorte que la direction de course du piston croise perpendiculairement la limite des pôle magnétiques,
résine ou boîtier en résine couvrant ledit CI à effet Hall (50) tout en le positionnant à l'intérieur, dans lequel
le CI à effet Hall du premier dispositif de détection de position (1a) met le signal de sortie en marche / à l'arrêt au moyen de la force magnétique provenant d'un premier pôle magnétique,
le CI à effet Hall du deuxième dispositif de détectionde de position (1b) met en marche / à l'arrêt le signal de sortie au moyen de la force magnétique émanant d'un deuxième pôle magnétique,
la résine ou le boîtier en résine étant
de la résine polyamide contenant approximativement 10 à 30 % de fibres de verre ou de la résine de polytéréphtalate de butylène contenant approximativement 10 à 30 % de fibres de verre,
la résine ou le boîtier en résine formant
une section d'installation de vis (40) pour l'installation d'une vis pour fixer chacun des dispositifs de détection de position, et
une première cavité (62) ayant la forme d'un solide approximativement rectangulaire, pouvant contenir le CI à effet Hall, formée près de la section d'installation de vis (40),
une deuxième cavité (64) et un renfoncement (66) ayant tous deux une forme de solide approximativement rectangulaire ou une forme approximativement semi-circulaire pour contenir un conducteur relié au CI à effet Hall, formés depuis le côté supérieur jusqu'au côté inférieur de la première cavité (62),
une paire de pièces de maintien (70) formée près de la deuxième cavité (64) et du renfoncement (66), la paire de pièces de maintien incluant
un support d'isolateur (67) dans lequel une coupe transversale longitudinale de la résine a une forme approximativement semi-circulaire, et
un support à section en fourreau (68), dans lequel la coupe transversale longitudinale de la résine qui maintient une section en fourreau couvrant chacun des conducteurs a une forme d'arc-en-ciel.

2. Unité de commande de cylindre selon la revendication 1, dotée d'un cadre pour le positionnement du CI à effet Hall dans la résine.

3. Unité de commande de cylindre selon la revendication 2, dans laquelle une section de positionnement en contact avec le moulage servant à couvrir le CI à effet Hall est formée sur le cadre.

4. Unité de commande de cylindre selon la revendication 2 ou 3, dans laquelle une ouverture pour le passage de la résine avant son durcissement est formée sur le cadre.

5. Unité de commande de cylindre selon n'importe laquelle des revendications 1 à 4, dans laquelle le deuxième dispositif de détection de position est monté sur un premier côté de pôle magnétique du corps magnétique et le premier dispositif de détection de position est monté sur un deuxième côté de pôle magnétique du corps magnétique.
